# FASCICULE DE BREVET EUROPEEN

(11) **EP 3 640 878 B1**
(45) Date de publication et mention de la délivrance du brevet: **21.06.2023**
(21) Numéro de dépôt: 18201011.6
(22) Date de dépôt: 17.10.2018
(51) Int. Cl.: G06Q 20/32, G06Q 20/34, G06Q 20/38, G07F 7/08, H04B 1/3827

(54) **PROCEDE ET SYSTEME D'ACTIVATION D'UN OBJET PORTABLE DE PAIEMENT SANS CONTACT**
VERFAHREN UND SYSTEM ZUR AKTIVIERUNG EINES KONTAKTLOSEN TRAGBAREN ZAHLUNGSOBJEKTS
METHOD AND SYSTEM FOR ACTIVATING A PORTABLE CONTACTLESS PAYMENT OBJECT

(43) Date de publication de la demande: 22.04.2020
(73) Titulaire: SWATCH AG, 2502 Biel/Bienne (CH)
(72) Inventeur: WINKELMANN, Christoph, 3270 Aarberg (CH)
(74) Mandataire: ICB SA

(56) Documents cités:
- EP-A1- 3 062 271
- WO-A1-2016/102408
- WO-A1-2016/172432
- US-A1- 2013 239 104
- US-A1- 2014 279 479
- US-A1- 2014 367 461
- US-A1- 2015 261 189
- US-A1- 2016 364 704
- US-A1- 2018 288 030
- US-A9- 2017 359 736
- US-B1- 6 678 535
- US-B1- 9 942 222
- LEONG C Y ET AL: "Near Field Communication and Bluetooth Bridge System for Mobile Commerce", INDUSTRIAL INFORMATICS, 2006 IEEE INTERNATIONAL CONFERENCE ON, IEEE, PI, 1 août 2006 (2006-08-01), pages 50-55, XP031003325, ISBN: 978-0-7803-9700-2
- SREEKAR KRISHNA ET AL: "A Wearable Wireless RFID System for Accessible Shopping Environments", PROCEEDINGS OF THE 3RD INTERNATIONAL ICST CONFERENCE ON BODY AREA NETWORKS, 1 janvier 2008 (2008-01-01), XP055560788, DOI: 10.4108/ICST.BODYNETS2008.2921 ISBN: 978-963-979-917-2
- Anonymous: "QR code - Wikipedia", , 11 October 2018 (2018-10-11), XP055906237, Retrieved from the Internet: URL:https://en.wikipedia.org/w/index.php?t itle=QR_code&oldid=863483923 [retrieved on 2022-03-29]

## Description

### Domaine de l'invention

L'invention porte sur un procédé d'activation d'un objet portable de paiement sans contact du type pièce d'horlogerie ou pièce de bijouterie apte à participer à la réalisation d'un paiement électronique par tokenisation ainsi que sur un système mettant en oeuvre un tel procédé.

L'invention porte également sur l'objet portable ainsi que sur une borne d'activation qui sont aptes à être mis en oeuvre dans ce système.

L'invention porte aussi sur un programme d'ordinateur comprenant des instructions de code de programme pour l'exécution d'étapes de ce procédé.

### Arrière-plan de l'invention

Avec le développement croissant de l'économie numérique, la part de transactions de paiement par carte bancaire a fortement augmenté ces dernières années. Dans ce contexte, des améliorations notables de la sécurisation de ces cartes bancaires ont été réalisées mais les fraudes à la carte bancaire restent encore existantes.

Afin de pallier cet inconvénient, de nouveaux modes de paiement ont alors fait leur apparition en proposant notamment un processus de paiement par « tokenisation » Dans ce nouveau processus, les données bancaires d'un potentiel acheteur sont alors substituées par des données jetables appelées « jeton » (token en anglais) qui sont hébergées dans une application de paiement mobile d'un support de paiement tel qu'un ordiphone. L'acheteur possède ainsi dans cet ordiphone un jeton qu'il peut utiliser pour un paiement en champ proche au moyen de la technologie NFC (« Near Field Communication », en anglais).

On connait aussi dans l'état de la technique le document EP3062271A1 qui décrit une montre connectée qui est configurée pour effectuer un paiement électronique. On connait également les documents US20130239104A1, US20140367461 A1, « QR code » du site Internet Wikipedia™ du 11 octobre 2018 accessible à partir lien hypertexte https://en.wikipedia.org/w/index.php?title=Qr_code&olid=863483923, qui concernent différents systèmes d'implémentation de QR codes.

Toutefois un des inconvénients majeurs de ce processus réside dans sa mise en oeuvre qui requiert de nombreuses opérations longues et complexes d'activation du support de paiement.

### Résumé de l'invention

Le but de la présente invention est de pallier en tout ou partie les inconvénients cités précédemment en proposant une activation du support de paiement simple et rapide.

A cet effet, l'invention porte sur un procédé d'activation d'un objet portable de paiement sans contact du type pièce d'horlogerie ou pièce de bijouterie apte à participer à la réalisation d'un paiement électronique par tokenisation, le procédé comprenant les étapes suivantes :
- obtention d'un jeton de paiement par un dispositif électronique mobile provenant d'un serveur d'un tiers de confiance fournisseur de service de paiement par jetons, et
- configuration de l'objet portable en vue de son utilisation prévoyant une transmission dudit jeton compris dans le dispositif électronique vers ledit objet portable par l'intermédiaire d'une borne d'activation, ladite borne comprenant un premier module de communication comportant une unité de communication de proximité NFC et un deuxième module de communication comprenant une unité de communication pour recevoir et émettre des données à distance via un réseau sans fil de type WIFI ou encore Bluetooth, et en ce que ladite étape de configuration de l'objet portable de paiement comprend une sous-étape d'agencement de cet objet portable sur une zone de transmission de données définie sur/dans la borne d'activation de manière à garantir un échange de données optimal entre un module de communication de proximité NFC de l'objet portable et le premier module de communication ;
ladite étape d'obtention comprenant :
- une sous-étape de numérisation par le dispositif électronique d'une première représentation graphique comprise sur la borne d'activation ladite première représentation graphique comprenant un code matriciel ;
- une sous-étape de décodage du code matriciel en vue d'obtenir des séquences d'informations binaires comportant des données relatives à un emplacement d'un fichier numérique de configuration du dispositif électronique ;
- une sous-étape de génération par le dispositif électronique configuré par le fichier numérique d'une requête d'obtention de ce jeton de paiement comprenant des données d'élaboration dudit jeton comportant au moins une donnée bancaire ;
- une sous-étape de transmission par le serveur du tiers de confiance au dispositif électronique du jeton de paiement, cette sous-étape de transmission comprenant une phase de génération du jeton de paiement par un module de traitement du serveur du tiers de confiance, et
ladite étape de configuration de l'objet portable comprenant :
- une sous-étape de numérisation par le dispositif électronique d'une deuxième représentation graphique comprise sur la borne d'activation, ladite représentation graphique comprenant un code matriciel ;
- une sous-étape de décodage du code matriciel en vue d'obtenir des séquences d'informations binaires comportant des données relatives à une configuration d'une liaison de communication entre ce dispositif électronique et la borne d'activation,
et en ce que lors de ladite étape de configuration une unité de traitement du dispositif électronique transmet au deuxième module de communication de la borne d'activation via son interface de communication le jeton généré par le serveur du tiers de confiance, ledit jeton étant ensuite transmis par le premier module de communication de la borne d'activation à l'objet portable via le module de communication de proximité NFC de cet objet portable.

L'invention porte aussi sur un système d'activation d'un objet portable de paiement sans contact du type pièce d'horlogerie ou pièce de bijouterie mettant en oeuvre ledit procédé, le système comprenant ledit dispositif électronique mobile, ledit serveur du tiers de confiance fournisseur de service de paiement par jetons, ladite borne d'activation et ledit objet portable de paiement sans contact.

L'invention porte aussi sur un programme d'ordinateur comprenant des instructions de code de programme pour l'exécution des étapes de ce procédé, lorsque ledit programme d'ordinateur est exécuté par le module de traitement du serveur du tiers de confiance, l'unité de traitement du dispositif électronique et le module de communication de proximité NFC de l'objet portable.

### Description sommaire des dessins

D'autres particularités et avantages ressortiront clairement de la description qui en est faite ci-après, à titre indicatif et nullement limitatif, en référence aux figures annexées, dans lesquelles :
- la figure 1 est représentation schématique d'un système d'activation d'un objet portable de paiement sans contact du type pièce d'horlogerie ou pièce de bijouterie apte à participer à la réalisation d'un paiement électronique par tokenisation, selon le mode de réalisation de l'invention, et
- la figure 2 est un logigramme relatif à un procédé d'activation de l'objet portable de paiement sans contact apte à participer à la réalisation du paiement électronique par tokenisation, selon le mode de réalisation de l'invention.

### Description détaillée des modes de réalisation préférés

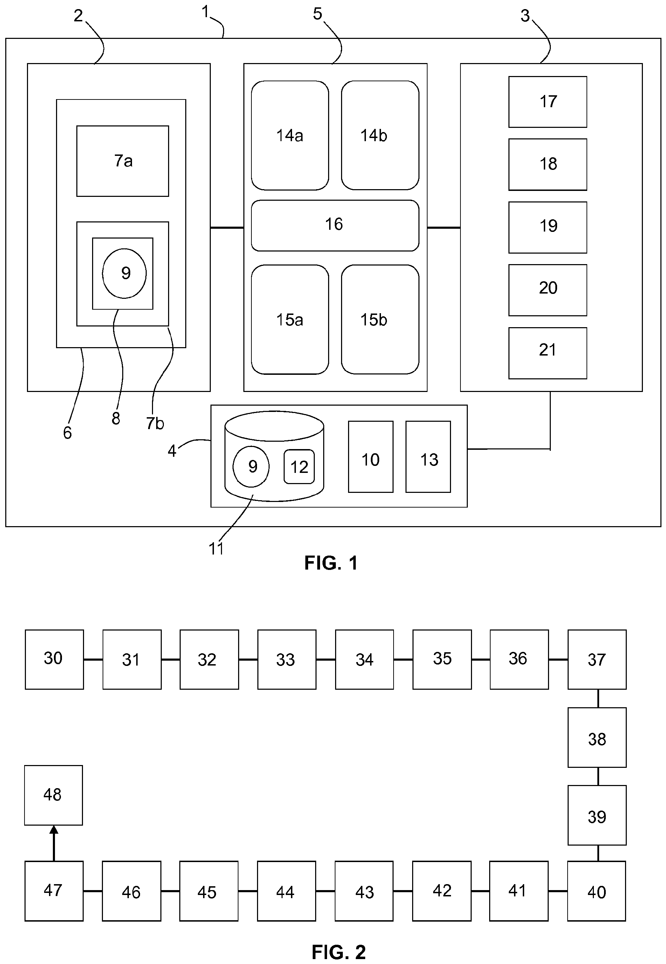

Sur la figure 1 est représenté un système d'activation 1 d'un objet portable 2 de paiement sans contact. Un tel système 1 permet de configurer l'objet portable 2 afin qu'il participe à la réalisation d'un paiement électronique par tokenisation lors d'une transaction réalisée entre un marchant/commerçant et le porteur de cet objet portable 2.

Le paiement électronique par tokenisation s'inscrit dans le domaine de la monétique. Dans un tel domaine, cette tokenisation est le processus de substitution de données de paiement telles que des données bancaires 12 (numéro de cartes, ...) par des données jetables appelées « jeton 9 » (token en anglais). Ce jeton 9 est aussi appelé « DAN » (pour « Digital Account Number » signifiant Numéro de Compte Numérique). Autrement dit, ce processus permet de remplacer une donnée critique par un élément équivalent ici le « jeton 9 », lequel jeton 9 n'aura aucune valeur intrinsèque ou signification exploitable une fois sortie du système paiement. On comprend donc que la tokenisation est le procédé permettant de remplacer une donnée critique par un élément équivalent qui n'aura aucune valeur intrinsèque ou signification exploitable une fois sortie du système de paiement.

Un tel système 1 comprend alors :
- l'objet portable 2 de paiement sans contact ;
- un dispositif électronique 3 ;
- un serveur d'un tiers de confiance 4 fournisseur de service de paiement par jetons 9 ;
- une borne d'activation 5.

Dans ce système 1, l'objet portable 2 de paiement sans contact est de préférence une pièce d'horlogerie ou une pièce de bijouterie. Un tel objet 2 comprend un module de communication 6 de proximité sans contact réalisant certaines fonctions de sécurité et des communications très courtes distances de type "communication en champ proche". Ce module est un module de communication 6 de proximité NFC (pour "Near Field Communication"). Ce module 6 comporte une antenne de communication 7a en champ proche et un microcircuit 7b raccordé à l'antenne. Le microcircuit 7b et l'antenne 7a forment ensemble des moyens de communication en champ proche aptes à communiquer avec un équipement externe tel qu'un terminal de paiement sans contact ou encore la borne d'activation 5. Le microcircuit 7b comprend des ressources matérielles et logicielles en particulier au moins un processeur coopérant avec des éléments de mémoire 8. Dans cet objet portable 2, l'antenne 7a est formée par exemple par une pluralité de spires électriquement conductrices et elle délimite une surface utile de réception d'un champ magnétique.

Dans cet objet portable 2, les éléments de mémoire 8 sont aptes à archiver au moins un jeton de paiement 9. Ce jeton 9 comprend de manière non exhaustive et non limitative :
- un identifiant du jeton tel qu'un numéro du jeton ;
- une date d'expiration du jeton ou période de validité du jeton ;
- une zone géographique d'utilisation du jeton ;
- un plafond de transaction ;
- un cryptogramme qui peut être un mot de passe, un code personnel, ou une empreinte biométrique numérique.

Ainsi que nous le verrons par la suite, chaque jeton 9 est généré par le serveur d'un tiers de confiance 4 fournisseur de service de paiement par jetons. Ce tiers de confiance autrement appelé fournisseur de service de jeton (en anglais Token Service Provider) gère le processus de délivrance et de génération de ce jeton 9. Ce serveur 4 comprend un module de traitement 10 pourvue de ressources matérielles et logicielles en particulier au moins un processeur coopérant avec des éléments de mémoire ainsi qu'une base données 11 comportant notamment des jetons 9 générés qui sont chacun associé à des données bancaires 12 du porteur. De telles données bancaires 12 comportent de manière non limitative et non exhaustive :
- un numéro de la carte bancaire du porteur,
- une date d'expiration de la carte ;
- des données personnelles du porteur : nom, prénom, adresse, etc...
- un numéro de compte bancaire ;
- etc,

Le serveur 4 comprend également une unité de communication 13 pour recevoir et émettre des données à distance via le réseau téléphonique cellulaire, un réseau de données de type IP via le réseau téléphonique ou un réseau de données de type IP via un réseau filaire de type Ethernet.

Ainsi que nous l'avons vu précédemment, la borne d'activation 5 de ce système 1 participe à la configuration de l'objet portable 2. Cette borne d'activation 5 est un boitier ayant de préférence une forme essentiellement parallélépipède. Une telle borne d'activation 5 comprend des première et deuxième représentations graphiques 14a, 14b comprenant chacune un code matriciel. Ce code matriciel peut-être un code-barres en deux ou trois dimensions. Ce code matriciel peut par exemple comprendre un code QR ou encore un code datamatrix. Ce code matriciel comprend des séquences d'informations binaires qui sont codées/chiffrées. Dans la première représentation graphique 14a le code matriciel comprend des séquences d'informations binaires comportant des données relatives à un emplacement d'un fichier numérique de configuration du dispositif électronique 3. S'agissant de la deuxième représentation graphique, le code matriciel comprend des séquences d'informations binaires comportant des données relatives à une configuration d'une liaison de communication, notamment sans fil, entre ce dispositif électronique 3 et le borne d'activation 5.

De telles première et deuxième représentations graphiques 14a, 14b sont définies sur une face externe visible de cette borne d'activation 5. On comprend que cette face externe visible est prévue pour que le dispositif électronique 3 puisse être agencé en regard de cette face externe de manière à être en mesure de capturer ces première et deuxième représentations graphiques 14a, 14b comme nous le verrons par la suite. La borne d'activation 5 comprend aussi une zone de transmission 16 de données dans laquelle l'objet portable 2 est susceptible d'être agencé ou qui est susceptible de recevoir/supporter ce dit objet portable 2.

Une telle borne d'activation 5 comprend deux modules de communication, des premier et deuxième modules de communication 15a, 15b. Ce premier module de communication 15a comprend une unité de communication de proximité sans contact réalisant certaines fonctions de sécurité et des communications très courtes distances de type "communication en champ proche". Cette unité est apte à échanger des données de manière bidirectionnelle avec le module de communication 6 de l'objet portable 2. Cette unité est une unité de communication de proximité NFC (pour "Near Field Communication"). Pour ce faire cette unité comprend une antenne de communication en champ proche et un microcircuit raccordé à l'antenne. Le microcircuit comprend des ressources matérielles et logicielles en particulier au moins un processeur coopérant avec des éléments de mémoire. Dans cet objet portable 2, l'antenne est formée par exemple par une pluralité de spires électriquement conductrices et elle délimite une surface utile de réception d'un champ magnétique.

Le deuxième module de communication 15b comprend une unité de communication pour recevoir et émettre des données à distance via un réseau sans fil de type WIFI ou encore Bluetooth. Ce deuxième module est apte à échanger des données de manière bidirectionnelle avec le dispositif électronique 3.

En complément, on notera que la borne d'activation 5 est reliée à une source d'alimentation électrique externe ou comprend un accumulateur électrique.

Le dispositif électronique 3 est par exemple un ordinateur, un ordiphone, un smartphone, une tablette, ou encore une borne électronique. Un tel dispositif électronique 3 est de préférence mobile et/ou portable et/ou compact. Ce dispositif électronique 3 comprend de manière non limitative et/ou non exhaustive :
- une unité de traitement 21 comportant des ressources matérielles et logicielles en particulier au moins un processeur coopérant avec des éléments de mémoire ;
- un module d'affichage 17 de type écran ;
- une interface de diffusion d'une information sonore telle qu'un haut-parleur ;
- une interface de communication 18 permettant au dispositif électronique 3 d'établir une liaison de communication avec la borne d'activation 5 et/ou avec le serveur du tiers de confiance 4 pour la réalisation d'échange de données ;
- une interface de sélection 19 tel qu'un clavier ou encore une interface tactile comprise par exemple dans le module d'affichage 17 ;
- un module de capture 20 d'au moins une image comprenant notamment au moins un capteur d'image autrement appelé un capteur d'image matriciel qui peut par exemple comprendre des capteurs de technologie CCD (technologie a transfert de charges) ou encore de technologie dite CMOS.

Dans ce dispositif électronique 3, l'unité de traitement 21 est reliée entre autres au module d'affichage 17, à l'interface de diffusion, à l'interface de communication 18 et à l'interface de sélection 19. L'interface de communication 18 de ce dispositif électronique 3 comprend des éléments de communication pour recevoir et émettre des données à distance via le réseau téléphonique cellulaire, un réseau de données de type IP via le réseau téléphonique ou un réseau de données de type IP via un réseau à moyenne portée, par exemple le WIFI ou de petite portée reposant sur une technologie Bluetooth.

Chaque capteur d'image du module de capture 20 comprend une matrice de points d'image (ou pixel) photosensibles. Cette matrice de points est également appelée ici « matrice de pixel » et comprend NxM pixels unitaires avec une excellente sensibilité à la lumière. Le module de capture 20 comprend aussi un convertisseur analogique-numérique AN relié à l'unité de traitement 21 du dispositif électronique 3.

En référence à la figure 2, ce système 1 met en oeuvre un procédé d'activation de l'objet portable 2 de paiement sans contact apte à participer à la réalisation d'un paiement électronique par tokenisation.

Ce procédé comprend une étape d'obtention 30 du jeton de paiement 9 par un dispositif électronique 3 provenant du serveur du tiers de confiance 4 fournisseur de service de paiement par jetons 9. L'étape 30 comprend une sous-étape de numérisation 31 par le dispositif électronique 3 de la première représentation graphique 14a comprise sur la borne d'activation 5, ladite représentation graphique 14a comprenant un code matriciel. Cette sous-étape 31, prévoit une phase d'acquisition 32 de cette première représentation graphique 14a dès lors que le dispositif électronique 3 est agencé à proximité immédiate de la borne d'activation 5 de manière à ce que le module de capture 20 soit disposé en regard de cette première représentation graphique 14a. Lors de cette phase 32, la matrice de pixels détecte au moins une image provenant de la première représentation graphique 14a et génère alors des signaux analogiques relatifs à cette image. Le convertisseur analogique-numérique du module de capture 20 convertit alors ensuite ces signaux analogiques provenant de cette matrice de pixels en des signaux numériques qui sont transmis ensuite à l'unité de traitement 21 du dispositif électronique 3.

Par la suite, cette étape 30 comprend une sous-étape de décodage 33 du code matriciel en vue d'obtenir des séquences d'informations binaires comportant des données relatives à un emplacement distant d'un fichier numérique de configuration du dispositif électronique 3. Cette sous-étape 33 comprend une phase de traitement 34 des signaux numériques relatifs à la représentation graphique 14a acquise comprenant le code matriciel. Lors de cette phase 34, l'unité de traitement 21 applique un algorithme de décodage audit signaux numériques de sorte à obtenir les séquences d'informations binaires comportant des données relatives à un emplacement d'un fichier numérique de configuration du dispositif électronique 3. Ces séquences d'informations binaires comprennent de préférence un lien hypertexte.

Ensuite, l'étape d'obtention 30 comprend une sous-étape de génération 35 par le dispositif électronique 3 configuré par le fichier numérique d'une requête d'obtention de ce jeton 9 de paiement comprenant des données d'élaboration dudit jeton 9 comportant au moins une donnée bancaire 12. Ainsi que nous l'avons vu précédemment, une donnée bancaire 12 comprend notamment des caractéristiques d'un compte bancaire et/ou d'un support d'un mode de paiement du porteur de l'objet portable 2. De telles données d'élaboration comportent de manière non limitative et non exhaustive :
- le numéro de la carte bancaire du porteur,
- la date d'expiration de la carte.

De manière alternative, ces données d'élaboration peuvent aussi comprendre des données personnelles du porteur : nom, prénom, adresse, etc. et/ou le numéro de compte bancaire du porteur.

Cette sous-étape 35 comprend une phase de configuration 36 du dispositif électronique 3 lors de laquelle le fichier électronique est exécuté par l'unité de traitement 21 dès lors que ce fichier numérique a été téléchargé d'un serveur de fichiers suite à l'exécution par l'unité de traitement 21 des séquences d'informations binaires comportant le lien hypertexte. Cette phase de configuration 36 permet ainsi de réaliser par l'exécution de ce fichier numérique une installation d'un programme informatique (ou d'une application logicielle) qui est ensuite mis en oeuvre par l'unité de traitement 21 lors d'une phase de génération 37 de la requête d'obtention de ce jeton 9. Cette phase de génération 37 prévoit la réalisation d'une collecte d'au moins une donnée bancaire du porteur de l'objet portable 2. Le ou les données bancaires 12 sont alors enregistrées momentanément dans l'unité de traitement 21 à partir notamment des interfaces de sélection 19 et d'affichage 17 du dispositif électronique 3 et ce, en prévision de la génération de la requête d'obtention. L'unité de traitement 21 gère alors la requête d'obtention de ce jeton 9 à partir de ladite au moins une donnée bancaire collectée. Par la suite cette sous-étape 35 comprend une phase de transmission 38 de la requête d'obtention comprenant ladite au moins une donnée bancaire collectée au serveur du tiers de confiance 4 fournisseur de service de paiement par jetons. Lors de cette phase 38, ladite au moins un données bancaire collectée comprise dans la requête peut être chiffrée et/ou la requête peut être envoyée à ce serveur 4 via un réseau sécurisé. On notera que cette requête d'obtention peut être transmise directement ou indirectement au serveur du tiers de confiance 4. Quand cette transmission est réalisée indirectement, la requête est alors transmise à ce serveur 4 par l'intermédiaire d'une plateforme technique agissant comme un service de tokenisation autrement appelé en anglais « token requestor » et qui peut alors s'occuper de véhiculer la demande de jeton 9.

Cette étape d'obtention 30 comprend par la suite une sous-étape de transmission 39 par le serveur du tiers de confiance 4 au dispositif électronique 3 d'un jeton de paiement 9. Cette sous-étape 39 comprend une phase de génération 40 du jeton de paiement 9 à partir de ladite au moins une donnée bancaire reçu par ce serveur 4. Lors de cette phase 40, le module de traitement 10 du serveur 4 génère alors le jeton de paiement 9 dérivé de ladite au moins une donnée bancaire. Une telle phase 40 peut prévoir la mise en oeuvre d'outils de génération aléatoire de ce jeton 9 tels que des algorithmes. Dans une variante, la génération de ce jeton 9 peut être réalisée à partir de la ou les données bancaires 12 et d'un diversifiant représentant une autorisation pour une transaction de paiement avec des critères de restriction d'usage déterminés par le serveur 4, par exemple une validité pour une ou plusieurs transactions bancaires, une validité temporelle, une validité pour un plafond de transaction.

Le procédé comprend aussi une étape de configuration 41 de l'objet portable 2 en vue de son utilisation prévoyant une transmission dudit jeton 9 compris dans le dispositif électronique 3 vers ledit objet portable 2 par l'intermédiaire de la borne d'activation 5. Cette étape 41 comprend une sous-étape d'agencement 42 de l'objet portable 2 sur/dans la zone de transmission 16 de données définie sur/dans la borne d'activation 5. Durant cette sous-étape 42, l'objet portable 2 est agencé sur/dans cette zone 16 de manière à garantir un échange de données optimal entre le module de communication 6 de proximité sans contact de l'objet portable 2 et le premier module de communication 15a de la borne d'activation 5.

Par la suite, l'étape de configuration 41 comprend une sous-étape de numérisation 43 par le dispositif électronique 3 d'une deuxième représentation graphique 14b comprise sur la borne d'activation 5, ladite représentation graphique 14b comprenant un code matriciel. Cette sous-étape 43, prévoit une phase d'acquisition 44 de cette deuxième représentation graphique 14b dès lors que le dispositif électronique 3 est agencé à proximité immédiate de la borne d'activation 5 de manière à ce que ce module de capture 20 soit disposé en regard de cette deuxième représentation graphique. Lors de cette phase 44, la matrice de pixels détecte au moins une image provenant de cette deuxième représentation graphique 14b et génère alors des signaux analogiques relatifs à cette image. Le convertisseur analogique-numérique du module de capture 20 convertit alors ensuite ces signaux analogiques provenant de cette matrice de pixels en des signaux numériques qui sont transmis après à l'unité de traitement 21 du dispositif électronique 3.

Ensuite, l'étape de configuration 41 comprend une sous-étape de décodage 45 du code matriciel en vue d'obtenir des séquences d'informations binaires comportant des données relatives à une configuration d'une liaison de communication entre ce dispositif électronique et la borne d'activation 5. Cette sous-étape 45 comprend une phase de traitement 46 des signaux numériques relatifs à la deuxième représentation graphique 14b acquise comprenant le code matriciel. Lors de cette phase 46, l'unité de traitement 21 applique un algorithme de décodage audit signaux numériques de sorte à obtenir les séquences d'informations binaires comportant des données relatives à la configuration d'une liaison de communication entre ce dispositif électronique 3 et la borne d'activation 5.

Ensuite, l'étape d'obtention 41 comprend une sous-étape d'établissement 47 d'une liaison de communication entre le dispositif électronique 3 et la borne d'activation 5. Lors de cette sous-étape 47, l'unité de traitement 21 paramètre l'interface de communication 18 de ce dispositif électronique 3 pour la configuration de la liaison de communication entre l'interface de communication 18 et le deuxième module de communication 15b de la borne d'activation 5.

Par la suite, lors d'une sous-étape de configuration 48 de l'objet portable 2 en prévision de son utilisation pour la réalisation d'une transaction de paiement, l'unité de traitement 21 du dispositif électronique 3 transmet au deuxième module de communication 15b de la borne d'activation 5 via son interface de communication 18, le jeton 9 généré par le serveur du tiers de confiance 4. Ce jeton 9 est ensuite transmis par le premier module de communication de la borne d'activation 5 à l'objet portable 2 via le module de communication 6 de proximité sans contact de cet objet 2.

En étant ainsi activé, l'objet portable 2 peut alors participer à la réalisation d'un paiement électronique par tokenisation lors d'une transaction établie entre un marchant/commerçant et le porteur de cet objet portable 2.

L'invention porte aussi sur un programme d'ordinateur comprenant des instructions de code de programme pour l'exécution d'étapes du procédé décrites ci-dessus lorsque ledit programme d'ordinateur est exécuté par le module de traitement 10 du serveur 4, l'unité de traitement 21 du dispositif électronique 3 et le module de communication 6 de proximité sans contact de l'objet portable 2.

## Revendications

1. Procédé d'activation d'un objet portable (2) de paiement sans contact du type pièce d'horlogerie ou pièce de bijouterie apte à participer à la réalisation d'un paiement électronique par tokenisation, le procédé comprenant les étapes suivantes :
- obtention (30) d'un jeton de paiement (9) par un dispositif électronique (3) mobile provenant d'un serveur d'un tiers de confiance (4) fournisseur de service de paiement par jetons, et
- configuration (41) de l'objet portable (2) en vue de son utilisation prévoyant une transmission dudit jeton (9) compris dans le dispositif électronique (3) vers ledit objet portable (2) par l'intermédiaire d'une borne d'activation (5), ladite borne (5) comprenant un premier module de communication (15a) comportant une unité de communication de proximité NFC et un deuxième module de communication (15b) comprenant une unité de communication pour recevoir et émettre des données à distance via un réseau sans fil de type WIFI ou encore Bluetooth, et en ce que ladite étape de configuration (41) de l'objet portable (2) de paiement comprend une sous-étape d'agencement (42) de cet objet portable (2) sur une zone de transmission (16) de données définie sur/dans la borne d'activation (5) de manière à garantir un échange de données optimal entre un module de communication (6) de proximité NFC de l'objet portable (2) et le premier module de communication (15a) ;
ladite étape d'obtention (30) comprenant :
- une sous-étape de numérisation (31) par le dispositif électronique (3) d'une première représentation graphique (14a) comprise sur la borne d'activation (5) ladite première représentation graphique (14a) comprenant un code matriciel ;
- une sous-étape de décodage (33) du code matriciel en vue d'obtenir des séquences d'informations binaires comportant des données relatives à un emplacement d'un fichier numérique de configuration du dispositif électronique (3) ;
- une sous-étape de génération (35) par le dispositif électronique (3) configuré par le fichier numérique d'une requête d'obtention de ce jeton de paiement (9) comprenant des données d'élaboration dudit jeton (9) comportant au moins une donnée bancaire (12) ;
- une sous-étape de transmission (39) par le serveur du tiers de confiance (4) au dispositif électronique (3) du jeton de paiement (9), cette sous-étape de transmission (39) comprenant une phase de génération (40) du jeton de paiement (9) par un module de traitement (10) du serveur du tiers de confiance (4);
ladite étape de configuration (41) de l'objet portable (2) comprenant :
- une sous-étape de numérisation (43) par le dispositif électronique (3) d'une deuxième représentation graphique (14b) comprise sur la borne d'activation (5), ladite représentation graphique (14b) comprenant un code matriciel ;
- une sous-étape de décodage (45) du code matriciel en vue d'obtenir des séquences d'informations binaires comportant des données relatives à une configuration d'une liaison de communication entre ce dispositif électronique (3) et la borne d'activation (5),
et en ce que lors de ladite étape de configuration 41) une unité de traitement (21) du dispositif électronique (3) transmet au deuxième module de communication (15b) de la borne d'activation (5) via son interface de communication (18) le jeton (9) généré par le serveur du tiers de confiance (4), ledit jeton (9) étant ensuite transmis par le premier module de communication (15a) de la borne d'activation (5) à l'objet portable (2) via le module de communication (6) de proximité NFC de cet objet portable (2).

2. Système d'activation (1) d'un objet portable (2) de paiement sans contact du type pièce d'horlogerie ou pièce de bijouterie mettant en oeuvre le procédé selon la revendication précédente, ledit système comprenant ledit dispositif électronique (3) mobile, ledit serveur du tiers de confiance (4) fournisseur de service de paiement par jetons (9), ladite borne d'activation (5) et ledit objet portable (2) de paiement sans contact.

3. Programme d'ordinateur comprenant des instructions de code de programme pour l'exécution des étapes du procédé selon la revendication 1, lorsque ledit programme d'ordinateur est exécuté par le module de traitement (10) du serveur du tiers de confiance (4), l'unité de traitement (21) du dispositif électronique (3) et le module de communication (6) de proximité NFC de l'objet portable (2).

## Patentansprüche

1. Verfahren zur Aktivierung eines kontaktlosen tragbaren Zahlungsobjekts (2) in der Art einer Uhr oder eines Schmuckstücks, das imstande ist, an der Durchführung einer elektronischen Zahlung durch Tokenisierung teilzuhaben, wobei das Verfahren die folgenden Schritte umfasst:
- Erhalt (30) eines Zahlungsjetons (9) durch eine mobile elektronische Vorrichtung (3), der von einem Server eines vertrauenswürdigen Dritten (4), Zahlungsdienstleister mittels Jetons stammt, und
- Konfiguration (41) des tragbaren Objekts (2) in Hinblick auf dessen Verwendung, die eine Übertragung des in der elektronischen Vorrichtung (3) enthaltenen Jetons (9) zum tragbaren Objekt (2) anhand einer Aktivierungsstation (5) vorsieht, wobei die Station (5) ein erstes Kommunikationsmodul (15a), das eine Nahfeldkommunikationseinheit NFC beinhaltet, und ein zweites Kommunikationsmodul (15b) umfasst, das eine Kommunikationseinheit umfasst, um aus der Entfernung Daten über ein drahtloses Netzwerk in der Art von WLAN oder Bluetooth zu empfangen und zu senden, und dadurch, dass der Konfigurationsschritt (41) des tragbaren Zahlungsobjekts (2) einen Anordnungsteilschritt (42) dieses tragbaren Objekts (2) in einer Datenübertragungszone (16) umfasst, die auf/in der Aktivierungsstation (5) derart definiert ist, um einen optimalen Datenaustausch zwischen einem Nahfeldkommunikationsmodul NFC (6) des tragbaren Objekts (2) und dem ersten Kommunikationsmodul (15a) zu gewährleisten;
wobei der Schritt des Erhalts (30) umfasst:
- einen Digitalisierungsteilschritt (31) durch die elektronische Vorrichtung (3) einer ersten grafischen Darstellung (14a), die in der Aktivierungsstation (5) vorhanden ist, wobei die erste grafische Darstellung (14a) einen Matrix-Code umfasst;
- einen Decodierungsteilschritt (33) des Matrix-Codes in Hinblick auf den Erhalt von binären Informationssequenzen, welche Daten in Bezug auf eine Stelle einer digitalen Datei zum Konfigurieren der elektronischen Vorrichtung (3) beinhalten;
- einen Generierungsteilschritt (35) durch die durch die digitale Datei konfigurierte elektronische Vorrichtung (3) einer Anfrage zum Erhalten dieses Zahlungsjetons (9), welcher Daten zur Ausarbeitung des Jetons (9) umfasst, der mindestens ein Bankdatum (12) beinhaltet;
- einen Übertragungsteilschritt (39) durch den Server des vertrauenswürdigen Dritten (4) des Zahlungsjetons (9) an die elektronische Vorrichtung (3), wobei dieser Übertragungsteilschritt (39) eine Generierungsphase (40) des Zahlungsjetons (9) durch ein Bearbeitungsmodul (10) des Servers des vertrauenswürdigen Dritten (4) umfasst;
wobei der Konfigurationsschritt (41) des tragbaren Objekts (2) umfasst:
- einen Digitalisierungsteilschritt (43) durch die elektronische Vorrichtung (3) einer zweiten grafischen Darstellung (14b), die in der Aktivierungsstation (5) vorhanden ist, wobei die grafische Darstellung (14b) einen Matrix-Code umfasst;
- einen Decodierungsteilschritt (45) des Matrix-Codes in Hinblick auf den Erhalt der binären Informationssequenzen, welche Daten in Bezug auf eine Konfiguration einer Kommunikationsverbindung zwischen dieser elektronischen Vorrichtung (3) und der Aktivierungsstation (5) beinhalten,
und dadurch, dass beim Konfigurationsschritt (41) eine Bearbeitungseinheit(21) der elektronischen Vorrichtung (3) dem zweiten Kommunikationsmodul (15b) der Aktivierungsstation (5) über deren Kommunikationsschnittstelle (18) den Jeton (9) überträgt, der durch den Server des vertrauenswürdigen Dritten (4) generiert worden ist, wobei der Jeton (9) danach durch das erste Kommunikationsmodul (15a) der Aktivierungsstation (5) über das Nahfeldkommunikationsmodul NFC (6) dieses tragbaren Objekts (2) an das tragbare Objekt (2) übertragen wird.

2. System zur Aktivierung (1) eines kontaktlosen tragbaren Zahlungsobjekts (2) in der Art einer Uhr oder eines Schmuckstücks, welches das Verfahren nach dem vorstehenden Anspruch umsetzt, wobei das System die mobile elektronische Vorrichtung (3), den Server eines vertrauenswürdigen Dritten (4), Zahlungsdienstleister mittels Jetons (9), die Aktivierungsstation (5) und das kontaktlose tragbare Zahlungsobjekt (2) umfasst.

3. Computerprogramm, welches Programmcodeanweisungen zur Ausführung der Schritte des Verfahrens nach Anspruch 1 umfasst, wenn das Computerprogramm durch das Bearbeitungsmodul (10) des Servers des vertrauenswürdigen Dritten (4), die Bearbeitungseinheit (21) der elektronischen Vorrichtung (3) und das Nahfeldkommunikationsmodul NFC (6) des tragbaren Objekts (2) umgesetzt wird.

## Claims

1. Method for activating a portable contactless payment object (2) of the timepiece or piece of jewellery type able to participate in the making of an electronic payment by tokenisation, the method comprising the following steps:
- obtaining (30) of a payment token (9) by a mobile electronic device (3) coming from a server of a trusted third party (4) providing a payment service by tokens, and
- configuration (41) of the portable object (2) with a view to use thereof providing a transmission of said token (9) included in the electronic device (3) to said portable object (2) by means of an activation terminal (5), said terminal (5) comprising a first communication module (15a) including an NFC proximity communication unit and a second communication module (15b) comprising a communication unit for receiving and sending data remotely via a wireless network of the Wi-Fi or Bluetooth type, and in that said step (41) of configuring the portable payment object (2) comprises a substep (42) of arranging this portable object (2) on a data transmission zone (16) defined on/in the activation terminal (5) so as to guarantee an optimum exchange of data between an NFC proximity communication module (6) of the portable object (2) and the first communication module (15a);
said obtaining step (30) comprising:
- a substep (31) of digitisation by the electronic device (3) of a first graphical representation (14a) included on the activation terminal (5), said first graphical representation (14a) comprising a matrix code;
- a substep (33) of decoding of the matrix code with a view to obtaining binary information sequences including data relating to a location of a digital file for configuration of the electronic device (3);
- a substep (35) of generation, by the electronic device (3) configured by the digital file, of a request to obtain this payment token (9) comprising data for production of said token (9) comprising at least one banking data item (12);
- a substep (39) of transmission of the payment token (9) by the server of the trusted third party (4) to the electronic device (3), this transmission substep (39) comprising a phase (40) of generating the payment token (9) by a processing module (10) of the server of the trusted third party (4);
said step (41) of configuring the portable object (2) comprising:
- a substep (43) of digitisation by the electronic device (3) of a second graphical representation (14b) included on the activation terminal (5), said graphical representation (14b) comprising a matrix code;
- a substep (45) of decoding of the matrix code with a view to obtaining binary information sequences including data relating to a configuration of a communication link between this electronic device (3) and the activation terminal (5),
and in that, during said configuration step (41), a processing unit (21) of the electronic device (3) transmits, to the second communication module (15b) of the activation terminal (5) via its communication interface (18), the token (9) generated by the server of the trusted third party (4), said token (9) next being transmitted by the first communication module (15a) of the activation terminal (5) to the portable object (2) via the NFC proximity communication module (6) of this portable object (2).

2. System (1) for activation of a portable contactless payment object (2) of the timepiece or piece of jewellery type implementing the method according to the preceding claim, said system comprising said mobile electronic device (3), said server of the trusted third party (4) providing the payment service by tokens (9), said activation terminal (5) and said portable contactless payment object (2).

3. Computer program, comprising program code instructions for the execution of the steps of the method according to claim 1, when said computer program is executed by the processing module (10) of the server of the trusted third party (4), the processing unit (21) of the electronic device (3) and the NFC proximity communication module (6) of the portable object (2).
